# EUROPEAN PATENT APPLICATION

(11) **EP 4 206 124 A1**
(43) Date of publication of application: **05.07.2023**
(21) Application number: 21861723.1
(22) Date of filing: 27.08.2021
(51) Int. Cl.: C01B 25/14, H01M 4/136, H01M 4/36, H01M 4/58, H01M 4/62, H01M 10/052, H01M 10/0562

(54) **ACTIVE MATERIAL, METHOD FOR PRODUCING SAME, ELECTRODE MIXTURE AND BATTERY**

(30) Priority: 28.08.2020 JP 2020145098
(71) Applicant: Mitsui Mining & Smelting Co., Ltd., Shinagawa-ku Tokyo 141-8584 (JP)
(72) Inventor: MIYASHITA, Norihiko, Ageo-shi, Saitama 362-0021 (JP)
(74) Representative: Novagraaf Technologies
(86) International application number: PCT/JP2021/031567
(87) International publication number: WO 2022/045302

(57) **Abstract**

An active material of the present invention contains: a compound containing lithium (Li) element, sulfur (S) element, and an element M and containing a crystalline phase having an argyrodite-type crystal structure; and a conductive material dispersed on the surface or in the interior of particles of the compound. The element M represents phosphorus (P) element or the like. The active material of the present invention is a composite material of the compound and the conductive material. It is preferable that the conductive material is a carbon material or a metallic material. It is also preferable that the content of the lithium element in the active material is from 10 to 25% by mass.

## Description

### Technical Field

The present invention relates to an active material and a method for producing the same. The present invention further relates to an electrode mixture and a battery containing the active material.

### Background Art

Lithium ion batteries are widely used as power sources for portable electronic devices such as notebook computers and cellular phones because of their high energy density and ease of size and weight reductions. Also, high-power, high-capacity lithium ion batteries for use in electric automobiles, hybrid electric automobiles, and the like have recently been under development.

For example, Patent Literature 1 has proposed a positive electrode active material containing a sulfide solid electrolyte material and a conductive material. Also, Non-Patent Literature 1 has proposed a positive electrode active material obtained by compositing Li₃PS₄ glass serving as a sulfide solid electrolyte and a carbon-based conductive aid.

Incidentally, the inventor of the present invention conducted a thorough investigation on sulfide solid electrolytes for use in lithium ion batteries and proposes a compound represented by the composition formula Li₇₋ₓPS₆₋ₓHa (where *x* is from 0.2 to 1.8, and *Ha* represents Cl or Br) (see Patent Literature 2). This compound has high lithium ion conductivity.

### Citation List

### Patent Literature

Patent Literature 1: US 2019/260065A1
Patent Literature 2: US 2016/156064A1

### Non-Patent Literature

Non-Patent Literature 1: Journal of Power Sources 293 (2015) 721-725

### Summary of Invention

The inventor of the present invention further conducted research aimed at improving the performance of lithium ion batteries. As a result, the inventor found that a better positive electrode active material is required for the purpose of further improving the performance of lithium ion batteries. It is an object of the present invention to provide an active material that can improve the performance of lithium ion batteries.

Electrolytes and active materials used in batteries play completely different roles. For example, in conventional techniques in which the material for use in a sulfide solid electrolyte is used as the material for an active material, it is difficult to further improve the battery performance such as capacity and rate characteristics. On the other hand, the inventor of the present invention found that a material obtained by mixing and compositing the sulfide solid electrolyte proposed in Patent Literature 2 above with a conductive material can not only function as an active material but also improve the battery performance such as capacity and rate characteristics compared with that in conventional examples when used as a positive electrode active material of a lithium ion battery.

The present invention was arrived at based on the above-described findings, and solves the above-described problems by providing an active material comprising:
a compound containing lithium (Li) element, sulfur (S) element and an element M, and containing a crystalline phase having an argyrodite-type crystal structure, wherein M comprises at least one selected from the group consisting of phosphorus (P), germanium (Ge), antimony (Sb), silicon (Si), tin (Sn), aluminum (Al), titanium (Ti), iron (Fe), nickel (Ni), cobalt (Co), and manganese (Mn)); and
a conductive material,
wherein the active material is a composite material of the compound and the conductive material.

Also, the present invention provides a preferred method for producing an active material, comprising:
a first step of preparing a compound containing lithium (Li) element, sulfur (S) element and an element M, and containing a crystalline phase having an argyrodite-type crystal structure, wherein M comprises at least one of phosphorus (P), germanium (Ge), antimony (Sb), silicon (Si), tin (Sn), aluminum (Al), titanium (Ti), iron (Fe), nickel (Ni), cobalt (Co), and manganese (Mn); and
a second step of mixing the compound and a conductive material to composite the compound with the conductive material

### Brief Description of Drawings

[Fig. 1] Fig. 1 shows charge-discharge curves of a battery using a positive electrode active material produced in Example 1.
[Fig. 2] Fig. 2 shows charge-discharge curves of a battery using a positive electrode active material produced in Example 5.
[Fig. 3] Fig. 3 shows charge-discharge curves of a battery using a positive electrode active material produced in Comparative Example 3.
[Fig. 4] Fig. 4 shows SEM-EDS images of the positive electrode active material produced in Example 5.
[Fig. 5] Fig. 5 shows SEM-EDS images of a positive electrode active material produced in Comparative Example 4.
[Fig. 6] Fig. 6 shows cross-sectional SEM-EDS images of a battery using the positive electrode active material produced in Example 5.
[Fig. 7] Fig. 7 shows cross-sectional SEM-EDS images of a battery using the positive electrode active material produced in Comparative Example 4.
[Fig. 8] Fig. 8 shows X-ray diffraction patterns of the positive electrode active materials produced in Examples 1, 3, and 4.
[Fig. 9] Fig. 9 shows X-ray diffraction patterns of the positive electrode active materials produced in Comparative Examples 3 and 4.
[Fig. 10] Fig. 10 shows charge-discharge curves of a battery using the positive electrode active material produced in Comparative Example 4.

### Description of Embodiment

The present invention will be described below based on its preferred embodiment. The present invention relates to an active material for batteries. Currently, lithium ion batteries are the mainstream rechargeable batteries, and there is a demand for even higher energy density in lithium ion batteries. From this point of view, solid-state batteries in which a sulfide, which has fewer restrictions on the active material and can achieve higher energy density, is used as a solid electrolyte are attracting attention. In addition, active materials with high capacity are required to achieve even higher energy density. Furthermore, active materials with high rate characteristics that can realize charge-discharge in a short time are also required. The active material of the present invention meets these requirements.

The active material of the present invention contains particles of a specific compound and a conductive material composited with the particles. That is to say, the active material of the present invention contains particles constituted by a main portion that contains particles of a specific compound and a conductive portion that contains a conductive material dispersed on the surface and/or in the interior of the main portion and imparts electronic conductivity. These main portion and conductive portion are described below.

The main portion is constituted by a compound containing a specific element. Specifically, the main portion is preferably constituted by a compound containing lithium (Li) element, sulfur (S) element, and an element M. The element M is preferably at least one of phosphorus (P) element, germanium (Ge) element, antimony (Sb) element, silicon (Si) element, tin (Sn) element, aluminum (Al) element, titanium (Ti) element, iron (Fe) element, nickel (Ni) element, cobalt (Co) element, and manganese (Mn) element, for example.

Examples of the compound containing Li element, S element, and an element M include Li₇PS₆, Li₇₊₃ₓ(P⁵⁺₁₋ₓFe²⁺ₓ)S₆, and Li₇₊ₓ(P⁵⁺₁₋ₓSi⁴⁺ₓ)S₆, which are a compound containing only Li element, S element, and an element M (where *x* is a number from 0.1 to 1.0).

Furthermore, the compound containing Li element, S element, and an element M may contain not only these three types of elements but also other elements. Examples of the other elements include halogen (X) element. Use of a compound containing not only Li element, S element, and an element M but also element X is preferable because the properties of the active material of the present invention are further improved. Examples of the element X include at least one selected from the group consisting of F, Cl, Br, and I.

The compound containing Li element, S element, an element M, and element X is preferably represented by the composition formula (1) LiₐMS_{b}X_{c}, wherein M represent at least one element selected from the group consisting of phosphorus (P), germanium (Ge), antimony (Sb), silicon (Si), tin (Sn), aluminum (Al), titanium (Ti), iron (Fe), nickel (Ni), cobalt (Co), and manganese (Mn), and X represent at least one element selected from the group consisting of fluorine (F), chlorine (Cl), bromine (Br), and iodine (I)), from the viewpoint of improving the ion conductivity, thereby further improving the properties of the active material.

From the viewpoint of improving the lithium ion conductivity, a is preferably from 3.0 to 9.0, more preferably from 3.5 to 8.0, and even more preferably from 4.0 to 7.5. Also, *b* is preferably from 3.5 to 6.0, more preferably from 4.0 to 5.8, and even more preferably from 4.2 to 5.5. Also, c is preferably from 0.10 to 3.0, more preferably from 0.50 to 2.5, and even more preferably from 1.0 to 1.8.

In particular, the element M in the above-mentioned composition formula is preferably at least one of phosphorus (P) element, germanium (Ge) element, antimony (Sb) element, tin (Sn) element, and silicon (Si) element, and more preferably contains phosphorus (P) element, from the viewpoint of further improving the properties of the active material.

The compound constituting the main portion is preferably represented by the composition formula (2) Li_{7-d}MS_{6-d}X_{d}, from the viewpoint of further improving the properties of the active material. In the formula, d is preferably from 0.40 to 2.2, more preferably from 0.80 to 2.0, and even more preferably from 1.2 to 1.8.

In the composition formulas (1) and (2), part of the element M may be substituted with one or at least two elements selected from the group consisting of silicon (Si) element, germanium (Ge) element, tin (Sn) element, lead (Pb) element, boron (B) element, aluminum (Al) element, gallium (Ga) element, arsenic (As) element, antimony (Sb) element, and bismuth (Bi) element. In this case, the formula (1) is Liₐ(M1_{1-y}M2_{y})S_{b}X_{c}, and the formula (2) is Li_{7-d}(M1_{1-y}M2_{y})S_{6-d}X_{d}. M2 is one or at least two elements selected from the group consisting of silicon (Si) element, germanium (Ge) element, tin (Sn) element, lead (Pb) element, boron (B) element, aluminum (Al) element, gallium (Ga) element, arsenic (As) element, antimony (Sb) element, and bismuth (Bi) element. Also, y is preferably from 0.010 to 0.70, more preferably from 0.020 to 0.40, and even more preferably from 0.050 to 0.20. Also, the M1 element is similar to the element M described in the composition formula (1).

The composition of each element in the compound constituting the main portion can be determined by ICP atomic emission spectrometry, for example.

The compound constituting the main portion preferably contains not only the above-mentioned elements but also a crystalline phase having an argyrodite-type crystal structure. Accordingly, the properties of the active material of the present invention are further improved. In particular, the compound constituting the main portion preferably contains a crystalline phase having a cubic argyrodite-type crystal structure. Whether or not a crystalline phase having an argyrodite-type crystal structure is contained can be determined by analyzing the active material of the present invention using the X-ray diffraction method. As the CuKα rays, it is possible to use CuKα1 rays, for example.

The compound constituting the main portion preferably has a peak at the positions 2θ=25.19°±1.00° and 29.62°±1.00° in an X-ray diffraction pattern measured using CuKα1 rays. These peaks are peaks derived from an argyrodite-type crystalline phase.

The compound constituting the main portion more preferably has a peak not only at the positions 2θ=25.19°±1.00° and 29.62°±1.00° but also at one or at least two positions selected from among 2θ=15.34°±1.00°, 17.74°±1.00°, 30.97°±1.00°, 44.37°±1.00°, 47.22°±1.00°, and 51.70°±1.00°, and even more preferably has a peak not only at the positions 2θ=25.19°±1.00° and 29.62°±1.00° but also at all positions of 2θ=15.34°±1.00°, 17.74°±1.00°, 30.97°±1.00°, 44.37°±1.00°, 47.22°±1.00°, and 51.70°±1.00°, in an X-ray diffraction pattern measured using CuKα1 rays. These peaks are peaks derived from an argyrodite-type crystalline phase.

The positions of the above-mentioned peaks are each represented by median±1.00°, but preferably represented by median±0.500°, and more preferably represented by median±0.300°.

The main portion contains the above-described compound, and may further contain other materials or other components as necessary. Accordingly, the main portion may be constituted by a single phase constituted by a crystalline phase having an argyrodite-type crystal structure, or may contain other phases in addition to this phase. For example, the core portion may contain an Li₂S phase, an Li₃PS₄ phase, an Li₄P₂S₆ phase, an LiCl or LiBr phase, or the like in addition to the crystalline phase having an argyrodite-type crystal structure. In particular, the main portion preferably contains an Li₂S phase in addition to the crystalline phase having an argyrodite-type crystal structure, from the viewpoint of increasing the capacity of the active material. It is preferable that the main portion is mainly made of a compound containing Li element, S element, an element M, and element X, and further containing a crystalline phase having an argyrodite-type crystal structure. Furthermore, the main portion may contain not only the above-mentioned other materials or other components but also unavoidable impurities to the extent that the effects of the present invention are unlikely to be adversely affected, for example, in an amount of less than 5% by mass, and in particular less than 3% by mass, approximately.

The main portion containing the above-described compound is in the form of particles, and the above-mentioned conductive portion containing a conductive material is arranged on the surface or in the interior of the particles. As the conductive material, any material having electronic conductivity can be used without particular limitation. Examples of the conductive material include various metallic materials and conductive non-metallic materials. Either one of these metallic materials or conductive non-metallic materials may be used, or a combination of both may be used. Examples of the metallic materials include various noble metal elements such as gold (Au) element, silver (Ag) element, platinum (Pt) element, palladium (Pd) element, rhodium (Rh) element, iridium (Ir) element, ruthenium (Ru) element, and osmium (Os) element. Examples thereof further include various transition metal elements such as copper (Cu) element, iron (Fe) element, and tin (Sn) element. These metallic elements may be used alone or in a combination of two or more.

As the conductive non-metallic materials, for example, a carbon material can be used. Examples thereof include graphite, acetylene black, carbon black, carbon nanofibers, carbon nanotubes, nanographene, and fullerene nanowhiskers. These carbon materials may be used alone or in a combination of two or more. Among these carbon materials, it is preferable to use carbon black from the viewpoint of improving the initial capacity and the discharge rate characteristics of the battery. From the viewpoint of making this advantage more remarkable, the carbon black is preferably Ketjen black, more preferably furnace black, and even more preferably oil furnace black.

The conductive portion containing the above-mentioned various conductive materials plays a role of electron conduction path when lithium is desorbed from or absorbed into the main portion, and thus the conductive portion has to be uniformly dispersed and in close contact with the surface or the interior of the main portion.

From the viewpoint of uniformly dispersing the conductive portion containing the conductive material on the surface and in the interior of the main portion, the size of the conductive material is preferably smaller than the size of the main portion. Specifically, when the particle size of the main portion is taken as D1 and the particle size of the conductive material is taken as D2, D1/D2 is preferably 2 or more, more preferably 5 or more, and even more preferably 10 or more, for example. On the other hand, D1/D2 is preferably 1000 or less, more preferably 500 or less, and even more preferably from 10 to 100, for example.

The particle size D1 of the main portion is preferably 0.1 µm or more, more preferably 0.2 µm or more, and even more preferably 0.5 µm or more, for example. On the other hand, D1 is preferably 20 µm or less, more preferably 10 µm or less, and even more preferably 5 µm or less, for example. Furthermore, the particle size D2 of the conductive portion is preferably 1 nm or more, more preferably 10 nm or more, and even more preferably 20 nm or more, for example. On the other hand, D2 is preferably 500 nm or less, more preferably 300 nm or less, and even more preferably 200 nm or less, for example.

The particle size of the main portion is expressed by a volume cumulative particle size D₅₀ at 50% cumulative volume as measured by laser diffraction scattering particle size distribution analysis (hereinafter "D₅₀" means this particle size). Meanwhile, when the conductive portion is dispersed in the interior of particles of the main portion, it is difficult to measure the particle size of the conductive portion by laser diffraction scattering particle size distribution analysis. Thus, the average particle size thereof is measured by directly observing the conductive portion dispersed in the interior of the main portion using a SEM (scanning electron microscope) or a TEM (transmission electron microscope). Note that, for example, if the conductive material is carbon nanotubes or carbon nanofibers described above, the fiber diameter refers to the diameter at a fiber cross section or the average value of the long and short diameters.

The active material of the present invention is a material in which the main portion and the conductive portion are composited with each other, that is, a composite material of particles of the compound constituting the main portion and the conductive material constituting the conductive portion. The "composited" state is preferably a state in which the conductive portion is dispersed on the surface or in the interior of the main portion and is integrally and inseparably in close contact with the main portion. Examples of the "composited" state include a state in which particles of the conductive material are inseparably dispersed on the surface and/or in the interior of particles of the compound and a state in which particles of the compound constituting the main portion and particles of the conductive material constituting the conductive portion chemically react to bind to each other. The state in which "particles of the conductive material are inseparably dispersed on the surface or in the interior of particles of the compound constituting the main portion" refers to, for example, a state in which it is seen that a constituent element (e.g., sulfur element) of the compound constituting the main portion and a constituent element of the conductive material constituting the conductive portion are present so as to overlap each other when mapping the constituent element (e.g., sulfur element) of the compound constituting the main portion and the constituent element of the conductive material constituting the conductive portion by observing the active material of the present invention using a scanning electron microscope with an energy-dispersive X-ray spectrometer (SEM-EDS). Alternatively, it refers to a state in which it is seen that a constituent element (e.g., sulfur element) of the compound constituting the main portion and a constituent element of the conductive material constituting the conductive portion are present so as to overlap each other on the surface or in the interior of the active material when observing a cross-section of a positive electrode layer of a battery produced using the active material of the present invention. Whether or not the main portion and the conductive portion are composited with each other can be determined from the presence or absence of C-S bonds using Raman spectroscopy or photoelectron spectroscopy, for example (when the conductive material is a carbon material).

The active material of the present invention allows electronic to be smoothly transferred between the exterior and the main portion of the active material via the conductive portion, and thus it is possible to acquire conductivity as well as lithium ion desorption/absorption function. Furthermore, if a compound having an argyrodite-type crystal structure with high lithium content and high lithium ion conductivity is used for the main portion, a battery containing the active material of the present invention exhibits high capacity and high rate characteristics. In particular, the active material of the present invention is useful as a positive electrode active material of a lithium ion battery. On the other hand, conventionally known sulfur-based positive electrode active materials such as sulfur simple substance, lithium sulfide (Li₂S) and its composite materials, or metal sulfides do not exhibit conductivity or have poor conductivity, and thus there is a problem in which a desired battery performance cannot be obtained when these materials are used as the active material.

In the active material of the present invention, the half width of the peak at the position 2θ=29.62±1.0° is preferably 0.4 or more, more preferably 0.5 or more, and even more preferably 0.6 or more, for example, in an X-ray diffraction pattern measured using CuKα1 rays. Note that the half width is usually 3.0 or less. In the present invention, the above-mentioned half width can be realized by performing a second step under a predetermined condition in a later-described production method to composite the main portion and the conductive portion with each other. This is clear from the results of the examples and comparative examples described below. That is to say, the half width of the peak at the position 2θ=29.62±1.0° is an indicator of the degree of compositing between the main portion and the conductive portion in the active material of the present invention.

In the active material of the present invention, the amount of conductive material is preferably 1 part by mass or more, more preferably 2 parts by mass or more, and even more preferably 5 parts by mass or more, with respect to 100 parts by mass of particles of the compound constituting the main portion, for example. On the other hand, the amount of conductive material is preferably 50 parts by mass or less, more preferably 20 parts by mass or less, and even more preferably 10 parts by mass or less, with respect to 100 parts by mass of particles of the compound constituting the main portion, for example. If the main portion and the conductive portion are present within this range, a battery containing the active material of the present invention remarkably exhibits high capacity and high rate characteristics.

In the active material of the present invention, the content of lithium element in the compound is preferably 10% by mass or more, more preferably 12% by mass or more, and even more preferably 15% by mass or more, for example. On the other hand, the content is preferably 25% by mass or less, more preferably 23% by mass or less, and even more preferably 21% by mass or less, for example. If the content of lithium element is set within this range, the capacity of a battery containing the active material of the present invention can be further improved.

In the active material of the present invention, the lithium ion conductivity of the compound constituting the main portion in the active material is preferably 1×10⁻⁵ S/cm or more, more preferably 1×10⁻⁴ S/cm or more, and even more preferably 1×10⁻³ S/cm or more, for example. If the conductivity of the compound constituting the main portion is improved, the rate characteristics of a battery containing the active material of the present invention can be further improved.

Next, a preferred method for producing the active material of the present invention will be described. This production method is roughly divided into a first step of preparing particles of the compound constituting the main portion and a second step of mixing the particles of the compound and a conductive material to composite these materials. Hereinafter, these steps will be described.

In the first step, particles of a compound containing the above-described elements and containing a crystalline phase having an argyrodite-type crystal structure are prepared. This compound can be produced using known methods. If the compound contains lithium (Li) element, phosphorus (P) element, sulfur (S) element, chlorine (Cl) element, and bromine (Br) element, for example, particles of the compound are obtained by mixing a lithium sulfide (Li₂S) powder, a bisphosphorus pentasulfide (P₂S₅) powder, a lithium chloride (LiCl) powder, and a lithium bromide (LiBr) powder and firing the mixture. For example, ball mills, bead mills, homogenizers, and the like are preferably used to mix these powders.

After mixing as described above, if the powder mixture is dried as necessary, fired under an inert atmosphere or with circulation of hydrogen sulfide gas (H₂S), crushed and milled as necessary, and classified, the above-described compound can be obtained.

The firing temperature when performing firing under an atmosphere containing hydrogen sulfide gas is preferably 350°C or more, and more preferably 450°C or more, for example. On the other hand, the firing temperature is preferably 650°C or less, more preferably 600°C or less, and even more preferably 500°C or less, for example.

Meanwhile, the firing temperature when performing firing under an inert atmosphere is preferably 350°C or more, for example. On the other hand, the firing temperature is preferably 550°C or less, more preferably 500°C or less, and even more preferably 450°C or less, for example.

Particles of the compound constituting the main portion can also be produced by amorphizing a raw material powder through mechanical milling and crystallizing the amorphized raw material powder through heat treatment as necessary. In this case, as long as the raw material powder can be sufficiently mixed and amorphized, there is no particular limitation on the treatment apparatus and treatment conditions. In particular, when a planetary ball mill is used, the container containing the raw material powder rotates and revolves at high speed to generate high impact energy between balls, which are milling media placed together with the raw material powder in the container, thereby enabling efficient and uniform amorphization of the raw material powder. The mechanical milling may be either a dry method or a wet method.

The treatment conditions for the mechanical milling can be set appropriately according to the treatment apparatus used, and, for example, the raw powder can be more efficiently and uniformly amorphized by performing the treatment for 0.1 to 100 hours. The balls as milling media are preferably made of ZrO₂, Al₂O₃, Si₃N₄ (silicon nitride), or WC (tungsten carbide), and preferably have a ball diameter of approximately 0.2 to 10 mm.

If the raw powder amorphized through mechanical milling is crystallized through heat treatment under firing conditions similar to those described above, the above-described compound can be obtained. The raw material powder that has undergone mechanical milling is more uniformly mixed than a raw material powder obtained through ordinary milling and mixing, and thus the temperature in the heat treatment can be further lowered.

Furthermore, particles of the compound constituting the main portion can also be produced by a liquid-phase method using an organic solvent. In this case, the above-described compound can be obtained by dissolving a sulfide and a halide that are raw materials for the compound constituting the main portion in a solvent such as tetrahydrofuran or ethanol, and allowing the compound to precipitate using the solvent as a reaction site. Also, the above-described compound can also be obtained by synthesizing the compound constituting the main portion using another method in advance, dissolving the compound in a solvent such as ethanol, and then allowing it to re-precipitate. This liquid-phase method can produce particles of the compound constituting the main portion in a shorter time and with less energy than other methods, and can make it relatively easy to reduce the particle size of the particles.

Once the main portion constituted by particles of the compound is obtained in this manner, this main portion is preferably adjusted to have an appropriate particle size. The preferable particle size of the main portion may be similar to that described above, and thus a description thereof has been omitted.

Next, the main portion and the conductive material are mixed and composited with each other. The conductive material that is used may be similar to that described above, and thus a description thereof has been omitted.

The main portion and the conductive material are composited by applying mechanical energy to particles of the compound constituting the main portion and particles of the conductive material, for example. For this purpose, compression/impact forces or shear/friction forces are preferably applied to the main portion and the conductive material in a mixed state.

In order to composite the main portion and the conductive material in a mixed state by applying mechanical energy such as compression/impact forces or shear/friction forces, it is preferable to employ an apparatus that is mainly used when agitating, mixing, kneading, granulating, milling, dispersing, and/or surface modifying powders, for example. For example, planetary ball mills, ball mills, jet mills, bead mills, agitation-type mills, vibration mills, hammer mills, roller mills, atomizers, and the like can be used. The main type of mechanical energy that can be imparted using these apparatuses varies between apparatuses, and, for example, when using a planetary ball mill, mainly compression/impact forces can be applied to the main portion and the conductive material in a mixed state, thereby compositing these materials with each other. There is no particular limitation on the centrifugal acceleration obtained during the rotation of the apparatus, as long as the main portion and the conductive portion can be composited with each other, but the centrifugal acceleration is preferably 10 G or more, more preferably 15 G or more, and even more preferably 18 G or more, for example. Furthermore, the centrifugal acceleration is preferably 40 G or less, more preferably 30 G or less, and even more preferably 25 G or less, for example. If the centrifugal acceleration is within this range, the effects of the present invention can be made more remarkable.

It is also possible to use the above-described liquid-phase method to composite the main portion and the conductive material with each other. In this case, the main portion and the conductive material can be composited with each other by dispersing the conductive material in an organic solvent in advance, and then adding raw materials for particles of the compound constituting the main portion or the compound constituting the main portion to the organic solvent, thereby allowing the particles to precipitate on the surface or in the interior of the conductive material. The compositing according to this method can further reduce the particle size of the composited particles.

The active material of the present invention can be mixed with an electrolyte, a conductive material, a binder, and the like to form an electrode mixture. When the active material of the present invention is used as a positive electrode active material, the electrode mixture is a positive electrode mixture that constitutes a positive electrode layer.

The electrolyte can be a solid electrolyte, for example. The solid electrolyte preferably has ion conductivity such as lithium ion conductivity. Specific examples thereof include inorganic solid electrolytes such as sulfide solid electrolytes, oxide solid electrolytes, nitride solid electrolytes, and halide solid electrolytes, and organic polymer electrolytes such as polymer electrolytes. From the viewpoint of making the effects of the present invention more remarkable, the solid electrolyte is preferably a sulfide solid electrolyte. Such a sulfide solid electrolyte may be similar to a sulfide solid electrolyte used in ordinary solid-state batteries. The sulfide solid electrolyte may contain Li and S and has lithium ion conductivity, for example.

The sulfide solid electrolyte may be any of crystalline material, glass ceramic, and glass. The sulfide solid electrolyte may have an argyrodite-type crystal structure. Examples of the sulfide solid electrolyte include compounds represented by Li₂S-P₂S₅, Li₂S-P₂S₅-LiX ("X" represents one or more halogen element), Li₂S-P₂S₅-P₂O₅, Li₂S-Li₃PO₄-P₂S₅, Li₃PS₄, Li₄P₂S₆, Li₁₀GeP₂S₁₂, Li_{3.25}Ge_{0.25}P_{0.75}S₄, Li₇P₃S₁₁, Li_{3.25}P_{0.95}S₄, and LiₐPS_{b}X_{c} ("X" represents one or more halogen element, a represents a number from 3.0 to 9.0, *b* represents a number from 3.5 to 6.0, and *c* represents a number from 0.1 to 3.0). Examples thereof further include sulfide solid electrolytes described in WO 2013/099834 and WO 2015/001818.

As the active material contained in the electrode mixture, the active material of the present invention may be used alone or in a combination with other active materials. Examples of the other active materials include known active materials containing sulfur simple substance or sulfur. The proportion of the active material of the present invention in the electrode mixture may be 20% by mass or more, 30% by mass or more, or 40% by mass or more, for example. On the other hand, the proportion may be 70% by mass or less, or 60% by mass or less, for example.

It is preferable that the battery of the present invention includes a positive electrode layer containing a positive electrode active material, a negative electrode layer containing a negative electrode active material, and a solid electrolyte layer containing a solid electrolyte, wherein the positive electrode active material is the above-described active material. The battery can be produced, for example, by stacking three layers of the positive electrode layer produced as described above, a solid electrolyte layer, and a negative electrode layer, and pressure-molding these layers.

In order to make the desired effects more remarkable, the battery of the present invention preferably has an interface where the positive electrode active material and the solid electrolyte are in contact with each other. The state in which "the positive electrode active material and the solid electrolyte are in contact with each other" may include both a state in which the positive electrode active material contained in the positive electrode layer and the solid electrolyte are in contact with each other and a state in which the positive electrode active material contained in the positive electrode layer and the solid electrolyte contained in the solid electrolyte layer are in contact with each other.

The battery containing the active material of the present invention is preferably a lithium ion battery, and more preferably a lithium sulfur battery. This battery may be a solid-state battery having a solid electrolyte layer, in particular, an all-solid-state battery. Furthermore, the battery of the present invention may be either a primary battery or a secondary battery, but is preferably a secondary battery, and more preferably a lithium secondary battery. The "lithium secondary battery" broadly refers to secondary batteries that are charged and discharged by lithium ions moving between the positive and negative electrodes.

A solid-state battery includes a positive electrode layer, a negative electrode layer, and a solid electrolyte layer between the positive electrode layer and the negative electrode layer. The active material of the present invention is preferably contained in the positive electrode layer. The "solid-state battery" refers to a solid-state battery that does not contain any liquid or gel substance as an electrolyte, as well as a solid-state battery that contains 50% by mass or less, 30% by mass or less, or 10% by mass or less of liquid or gel substance as an electrolyte, for example.

### Examples

Hereinafter, the present invention will be described in more detail by means of the following examples. However, the scope of the invention is not limited to these examples. Unless otherwise specified, "%" and "parts" mean "% by mass" and "parts by mass" respectively.

### Example 1

A lithium sulfide (Li₂S) powder, a bisphosphorus pentasulfide (P₂S₅) powder, and a lithium chloride (LiCl) powder were each weighed to a total amount of 2 g, and mixed and milled at 150 rpm for 20 hours using a planetary ball mill (P-7 manufactured by Fritsch) to prepare a powder mixture represented by the composition Li_{5.8}PS_{4.8}Cl_{1.2} shown in Table 1. This powder mixture was filled into a carbon container, and heated at a programming rate of 200°C/h and fired at 500°C for 4 hours in a tube-type electric furnace with circulation of hydrogen sulfide gas (H₂S, 100% purity) at 1.0 L/min. Subsequently, the sample was crushed in a mortar and milled using a ball mill, and then sieved through a 53-µm sieve to obtain a powder of the compound with a particle size D₅₀ of 3.8 µm. X-ray diffraction (alternatively referred to as "XRD" hereinafter) measurements showed that the compound had a crystalline phase having an argyrodite-type crystal structure.

Ketjen black (registered trademark) EC300, a conductive carbon black manufactured by Lion Specialty Chemicals Co., Ltd., was used as the conductive material. This conductive material had a particle size D₅₀ of 0.04 µm. In this example, 20 parts of conductive material was used with respect to 100 parts of the compound, and they were mixed at 500 rpm for 10 hours using a planetary ball mill (P-7 manufactured by Fritsch) and composited with each other. Subsequently, the sample was crushed in a mortar, and then sieved through a 53-µm sieve to obtain particles of the positive electrode active material with a particle size D₅₀ of 3.2 µm.

All the above operations were carried out in a glove box purged with sufficiently-dried Ar gas (with a dew point of -60°C or less).

### Examples 2 to 4

Powders of the compounds were obtained in a similar way to that of Example 1, except that raw material powders were mixed to obtain compounds respectively represented by the compositions Li_{6.8}PS₅.₈Cl_{0.2}, Li_{5.4}PS_{4.4}Cl_{0.8}Br_{0.8}, and Li_{5.8}PS_{4.8}Cl_{1.2} shown in Table 1. XRD measurements showed that the obtained compounds had a crystalline phase having an argyrodite-type crystal structure. Carbon nanotubes (VGCF (registered trademark)-H manufactured by Showa Denko K.K.) or Ketjen black as in Example 1 were used as the conductive material. Note that the carbon nanotubes had a fiber diameter of 150 nm and a fiber length of 6 µm.

In Example 4, particles of the active material were obtained in a similar way to that of Example 1, except that 10 parts of Ketjen black was used with respect to 100 parts of the compound.

### Examples 5 and 6

Raw material powder were each weighed to a total amount of 2 g, and subjected to mechanical milling at 500 rpm for 20 hours using a planetary ball mill (P-7 manufactured by Fritsch) to prepare amorphized powder mixtures respectively represented by the compositions Li₇PS₆ and Li_{7.3}P_{0.9}Fe_{0.1}S₆ shown in Table 1. Subsequently, each of these amorphized powder mixtures was filled into a carbon container, and heated at a programming rate of 200°C/h and fired at 400°C for 4 hours in a tube-type electric furnace with circulation of inert gas (Ar gas with a purity of 100%) at 1.0 L/min. Subsequently, the sample was crushed in a mortar, and then sieved through a 53-µm sieve to obtain a powder of the compound with a particle size shown in Table 1. XRD measurements showed that this compound had a crystalline phase having an argyrodite-type crystal structure. Particles of the active material were obtained in a similar way to that of Example 2, except for these aspects.

### Comparative Example 1

This comparative example is an example in which particles of the active material were produced by compositing a conductive material constituted by Ketjen black with the surface and the interior of particles of sulfur simple substance.

In this example, 20 parts of Ketjen black with a particle size D₅₀ of 0.04 µm was used with respect to 100 parts of sulfur particles with a particle size D₅₀ of 35.6 µm, and they were mixed at 500 rpm for 10 hours using a planetary ball mill (P-7 manufactured by Fritsch) in a similar way to that of Example 1 and composited with each other. In this manner, particles of the active material with a particle size D₅₀ of 28.4 µm were obtained.

### Comparative Example 2

This comparative example is an example in which particles of the active material were produced by compositing a conductive material constituted by carbon nanotubes with the surface and the interior of particles of lithium sulfide.

In this example, 20 parts of carbon nanotubes with a particle size D₅₀ of 0.15 µm was used with respect to 100 parts of lithium sulfide particles with a particle size D₅₀ of 20 µm, and they were mixed at 500 rpm for 10 hours using a planetary ball mill (P-7 manufactured by Fritsch) in a similar way to that of Example 1 and composited with each other. In this manner, particles of the active material with a particle size D₅₀ of 17.4 µm were obtained.

### Comparative Example 3

This comparative example is an example in which particles of the active material were produced without compositing a conductive material constituted by Ketjen black with the surface and the interior of Li_{5.8}PS_{4.8}Cl_{1.2} particles used in Example 1.

In this example, 20 parts of Ketjen black was used with respect to 100 parts of Li_{5.8}PS_{4.8}Cl_{1.2} particles with a particle size D₅₀ of 3.8 µm, and they were mixed at 200 rpm for 10 hours using a planetary ball mill (P-7 manufactured by Fritsch) in a similar way to that of Example 1. In this manner, particles of the active material with a particle size D₅₀ of 3.6 µm were obtained.

### Comparative Example 4

This comparative example is an example in which, in a similar way to that of Comparative Example 3, particles of the active material were produced without compositing a conductive material constituted by Ketjen black with the surface and the interior of Li_{5.8}PS_{4.8}Cl_{1.2} particles used in Example 1.

In this example, 20 parts of Ketjen black was used with respect to 100 parts of Li_{5.8}PS_{4.8}Cl_{1.2} particles with a particle size D₅₀ of 3.8 µm, and they were mixed at 300 rpm for 1 hour using a planetary ball mill (P-7 manufactured by Fritsch) in a similar way to that of Example 1. In this manner, particles of the active material with a particle size D₅₀ of 3.3 µm were obtained.

### Comparative Example 5

This comparative example is an example in which the active material was obtained using only Li₇PS₆ particles used in Example 5 without compositing them with the conductive material.

### Measurement of Elemental Composition

The powders of the compounds constituting the main portions obtained in the examples and the comparative examples were each entirely dissolved and measured by ICP atomic emission spectrometry to obtain the elemental composition. As a result, it was seen that the elemental composition substantially matched the ratio of the raw material compounds in the preparation. The lithium content in each of the active materials obtained in the examples and the comparative examples was measured using a similar method.

### Identification of Product Phases

The powders of the compounds constituting the main portions obtained in the examples and the comparative examples were each measured using the X-ray diffraction method (XRD) to identify the product phases.

### XRD Measurements

The positive electrode active material powders obtained in the examples and the comparative examples were each packed in a non-exposed, airtight holder in a glove box purged with sufficiently-dried Ar gas (with a dew point of -60°C or less), and subjected to XRD measurements. In the XRD measurements, the product phases were identified, and a half width of a peak (alternatively referred to as a "peak A" hereinafter) at the position 2θ=29.62°±1.0° of the argyrodite-type crystalline phase was calculated. The XRD measurement conditions were as follows.
- Device name: fully automatic multi-purpose X-ray diffractometer SmartLab SE (manufactured by Rigaku)
- Radiation source: CuKα1
- Tube voltage: 40 kV
- Tube current: 50 mA
- Measuring method: concentration method (reflection method))
- Optical system: multilayer mirror divergent beam method (CBO-α)
- Detector: one-dimensional semiconductor detector
- Incident solar slit: solar slit 2.5°
- Length limiting slit: 10 mm
- Light-receiving solar slit: 2.5°
- Incident slit: 1/6°
- Light-receiving slit: 2 mm (open)
- Measurement range: 2θ = 10 to 120°
- Step width: 0.02°
- Scanning speed: 1.0°/min

### Particle Size D₅₀

The powders of the compounds constituting the main portions and the positive electrode active material powders obtained in the examples and the comparative examples were each introduced as a sample (powder) in a water-soluble solvent using an automatic sample supply machine for a laser diffraction particle size distribution measurement device ("Microtorac SDC" manufactured by MicrotracBEL Corp.), and irradiated with ultrasonic waves at 40 W for 360 seconds, a plurality of times, in a flow rate of 40%, after which the particle size distribution was measured using a laser diffraction particle size distribution measurement device "MT3000II" manufactured by MicrotracBEL Corp., and the particle size D₅₀ was determined from the obtained volume-basis particle size distribution chart.

### Ion Conductivity

The powders of the compounds constituting the main portions obtained in the examples and the comparative examples were each uniaxially pressurized and molded in a glove box purged with sufficiently-dried Ar gas (with a dew point of -60°C or less) and compressed at 200 MPa using a CIP (cold isostatic pressurizer) to produce a pellet with a diameter of 10 mm and a thickness of about 4 to 5 mm. Furthermore, carbon paste was applied to the top and bottom surfaces of the pellet as electrodes, and then heat-treated at 180°C for 30 minutes to produce a sample for ion conductivity measurement. Ion conductivity (S/cm) was measured at room temperature (25°C) using a Solartron 1255B manufactured by Toyo Corporation at a measurement frequency of 0.1 Hz to 1 MHz according to an alternating-current impedance method.

### Observation and Elemental Mapping of Active Material Particles

The positive electrode active material powders obtained in the examples and the comparative examples were each observed using a scanning electron microscope with an energy-dispersive X-ray spectrometer (SEM-EDS), sulfur element serving as a constituent element of the compound constituting the main portion and a constituent element of the conductive material were mapped, and thus the state in which sulfur element in the compound and the constituent element of the conductive material were present was measured to determine the composited state.

Furthermore, later-described batteries were produced using the active materials obtained in the examples and the comparative examples, a cross-section of a positive electrode layer of each of the batteries was observed as described above, and the state in which sulfur element in the compound and the constituent element of the conductive material were present on the surface and in the interior of the active material to determine the composited state in a battery state.

### Battery Evaluation

Solid-state batteries were produced according to the following procedure using the active materials obtained in the examples and the comparative examples as a positive electrode active material, and the produced solid-state batteries were evaluated according to the following procedure in terms of initial capacity and rate characteristics. Tables 1 and 2 below show the results.

### Production of All-Solid-State Battery Cell

All-solid-state batteries were produced using the materials produced in the examples and the comparative examples as the positive electrode active material, Li_{5.4}PS_{4.4}Cl_{0.8}Br_{0.8} having an argyrodite-type crystal structure as the solid electrolyte powder for use in the positive electrode layer and the solid electrolyte layer, and In-Li metal as the negative electrode active material for the negative electrode layer.

### Preparation of Positive Electrode Mixture

A positive electrode mixture powder for the positive electrode layer was prepared by mixing the positive electrode active material powders obtained in the examples and the comparative examples and the solid electrolyte powder in a mass ratio of 60:40 in a motor. In Comparative Example 4, the positive electrode active material powder is not composited with the conductive material, and thus preparation was performed by mixing the positive electrode active material powder, the solid electrolyte powder, and the above-described carbon nanotubes as a conductive material for imparting conductivity to the positive electrode layer in a mass ratio of 50:40:10 in a motor.

### Production of All-Solid-State Battery Cell

The lower opening of a polypropylene cylinder (with an opening diameter of 10.5 mm and a height of 18 mm) with openings at the top and bottom was sealed with a negative electrode (made of SUS), a solid electrolyte powder was placed on the negative electrode and sealed with a positive electrode (made of SUS), after which the stacked materials were uniaxially pressurized at 200 MPa to form a solid electrolyte layer. Next, the positive electrode was temporarily removed, a positive electrode mixture powder was placed on the solid electrolyte layer and sealed with the positive electrode again, after which the stacked materials were uniaxially pressurized at 560 MPa to stack the positive electrode layer and the solid electrolyte layer. Subsequently, the cylinder was turned upside down, the negative electrode was temporarily removed, In-Li foil was placed on the solid electrolyte layer and sealed with the negative electrode again, after which the materials stacked between the positive and negative electrodes were finally clamped at a load of 6 N·m using a C-clamp to produce an all-solid-state battery cell in which the positive electrode layer, the solid electrolyte layer, and the negative electrode layer were stacked. Note that the thickness of the positive electrode layer was about 40 µm, the thickness of the solid electrolyte layer was about 600 µm, and the thickness of the negative electrode layer was about 400 µm. The all-solid-state battery cell was produced in a glove box purged with argon gas with a dew point of -60°C. The produced all-solid-state battery was connected to a charge-discharge measurement device in an environmental test chamber maintained at 25°C to evaluate battery characteristics. The current of 2.0 mA during charging and discharging was defined as the 1 C rate.

### Initial Capacity

In the first charge-discharge (first cycle), the battery was charged at 0.03 C to 3.0 V using the CC-CV method and discharged at 0.03 C to 0.38 V using the CC-CV method in order to efficiently desorb and absorb lithium ions contained in the positive electrode active material. In the second cycle, the battery was charged at 0.1 C to 3.0 V using the CC-CV method and discharged at 0.1 C to 0.38 V using the CC method. The charge-discharge capacity in the second cycle was taken as the initial charge-discharge capacity. Note that the active material obtained by compositing sulfur simple substance and the conductive material in the Comparative Example 1 did not contain lithium element in the active material, and thus the first cycle was started from discharge.

### Rate Characteristics

The battery was charged and discharged using the above-mentioned method in the third cycle and charged and discharged at rates of 0.2 C, 0.5 C, 1 C, 2 C, and 5 C in the fourth and following cycles, and the rate characteristics were evaluated by comparing the discharge capacity at each rate with the discharge capacity in the second cycle (0.1 C).

**Table 1**

| | | Example | | | | | |
|---|---|---|---|---|---|---|---|
| | | 1 | 2 | 3 | 4 | 5 | 6 |
| Main portion | Material | Li_{5.8}PS_{4.8}Cl_{1.2} | Li_{6.8}PS_{5.8}Cl_{0.2} | Li_{5.4}PS_{4.4}Cl_{0.8}Br_{0.8} | Li_{5.8}PS_{4.8}Cl_{1.2} | Li₇PS₆ | Li_{7.3}P_{0.9}Fe_{0.1}S₆ |
| | Production method | Mixing → firing under H₂S gas atmosphere | Mixing → firing under H₂S gas atmosphere | Mixing → firing under H₂S gas atmosphere | Mixing → firing under H₂S gas atmosphere | Mechanical milling -> heat treatment under Ar gas atmosphere | Mechanical milling -> heat treatment under Ar gas atmosphere |
| | Product phase (XRD) | Argyrodite | Argyrodite | Argyrodite | Argyrodite | Argyrodite+Li₂S | Argyrodite |
| | Particle size D₅₀ [µm] | 3.8 | 9.8 | 2.8 | 3.8 | 7.8 | 9.3 |
| | Ion conductivity [S/cm] | 2.3×10⁻³ | 5.6×10⁻⁴ | 4.5×10⁻³ | 2.3×10⁻³ | 1.4×10⁻⁴ | 3.4×10⁻⁴ |
| Conductive portion | Material | Ketjen black^{®} | VGCF^{®} | VGCF^{®} | Ketjen black^{®} | VGCF^{®} | VGCF^{®} |
| | Particle size D₅₀ [µm] | 0.04 | 0.15 | 0.15 | 0.04 | 0.15 | 0.15 |
| | Amount of use [mass%] (with respect to 100 mass parts of core portion) | 20 | 20 | 20 | 10 | 20 | 20 |
| Compositing treatment | | Performed | Performed | Performed | Performed | Performed | Performed |
| Active material | Particle size D₅₀ [µm] | 3.2 | 10.8 | 2.5 | 3.6 | 6.6 | 9.1 |
| | Lithium content | 15.1 | 17.9 | 12.5 | 15.1 | 17.9 | 18.4 |
| | [mass%] | | | | | | |
| Battery characteristics | Initial capacity [mAh/g] | 586.2 | 745 | 469 | 577.4 | 769.9 | 780.5 |
| | Discharge rate characteristics [%] (0.1 C/5 C) | 57.4 | 33.5 | 34.1 | 40.6 | 15.0 | 39.7 |

**Table 2**

| | | Comparative Example | | | | |
|---|---|---|---|---|---|---|
| | | 1 | 2 | 3 | 4 | 5 |
| Main portion | Main portion | S | Li₂S | Li_{5.8}PS_{4.8}Cl_{1.2} | Li_{5.8}PS_{4.8}Cl_{1.2} | Li₇PS₆ |
| | Production method | - | - | Mixing → firing under H₂S gas atmosphere | Mixing → firing under H₂S gas atmosphere | Mechanical milling → heat treatment under Ar gas atmosphere |
| | Product phase (XRD) | S | Li₂S | Argyrodite | Argyrodite | Argyrodite+Li₂S |
| | Particle size D₅₀ [µm] | 10.3 | 19.8 | 3.8 | 3.8 | 7.8 |
| | Ion conductivity [S/cm] | (Not measurable) | 1.2×10⁻⁸ | 2.3×10⁻³ | 2.3×10⁻³ | 1.4×10⁻⁴ |
| Conductive portion | Material | Ketjen black^{®} | VGCF^{®} | Ketjen black^{®} | Ketjen black^{®} | - |
| | Particle size D₅₀ [µm] | 0.04 | 0.15 | 0.04 | 0.04 | - |
| | Amount of use [mass%] (with respect to 100 mass parts of core portion) | 20 | 20 | 20 | 30 | - |
| Compositing treatment | | Performed | Performed | Not performed | Not performed | Not performed |
| Active material | Particle size D₅₀ [µm] | 28.4 | 17.4 | 3.4 | 3.3 | 7.8 |
| | Lithium content | - | 30.3 | 15.1 | 15.1 | 17.9 |
| | [mass%] | | | | | |
| Battery characteristics | Initial capacity [mAh/g] | 820.6 | 48.4 | 368.4 | 115.5 | 6.2 |
| | Discharge rate characteristics [%] (0.1 C/5 C) | 5.5 | 0 (5 C: Not discharged) | 4.1 | 27.0 | 0 (5 C: Not discharged) |

As is clear from the results shown in Tables 1 and 2, it is seen that the all solid-state batteries using the active materials of the examples as the positive electrode active material were superior to those of the comparative examples in terms of both initial capacity and rate characteristics. In particular, as is clear from the comparison between Examples 1 and 3 using the conductive portion containing Ketjen black and Examples 2, 3, 5, and 6 using the conductive portion containing carbon nanotubes, it is seen that the discharge rate characteristics of the batteries were higher in Examples 1 and 3. That is to say, the discharge rate characteristics of batteries can be improved if the conductive portion contains Ketjen black.

In Comparative Example 1 using sulfur simple substance as the main portion, the initial capacity was high, but the rate characteristics were low. The inventor of the present invention thinks that the reason for this is that the lithium ion conductivity of sulfur simple substance is too low to be measured, and thus lithium ions cannot be quickly absorbed into the sulfur simple substance even if the rate is increased by increasing the current during discharge.

Elemental mapping using SEM-EDS showed that the active materials obtained in the examples were present in such a manner that sulfur element and carbon element overlapped each other on the surface and in the interior of the active materials.

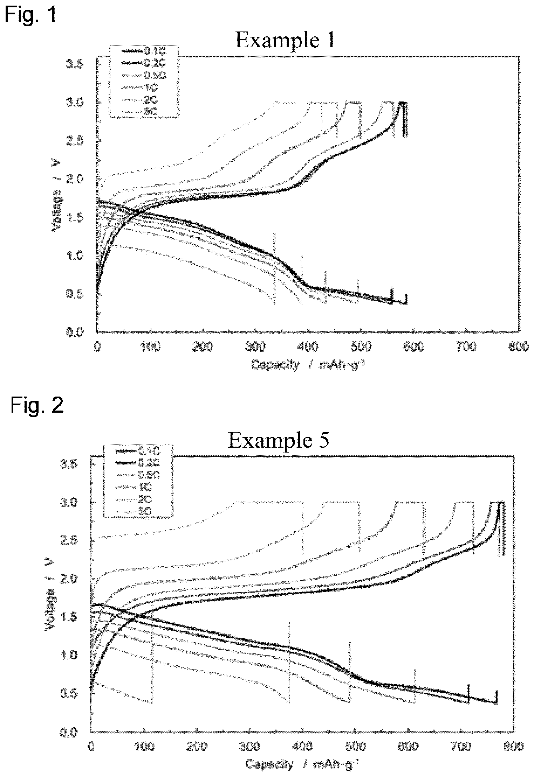

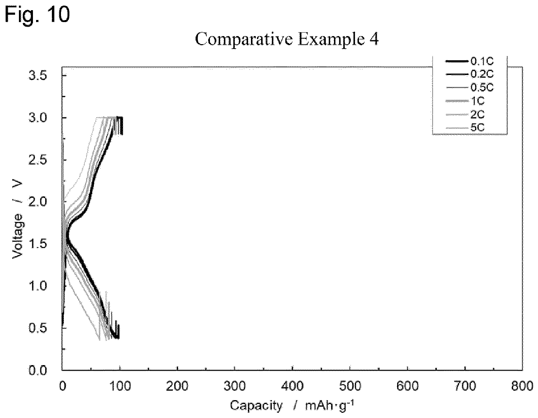

Figs. 1, 2, 3, and 10 show charge-discharge curves of the all-solid-state batteries using the positive electrode active materials produced in Examples 1 and 5, and Comparative Examples 3 and 10 respectively when the charge-discharge rate was changed to 0.1 C, 0.2 C, 0.5 C, 1 C, 2 C, and 5 C. The all-solid-state batteries using the positive electrode active materials produced in Examples 1 and 5 had a high discharge capacity even when the charge-discharge rate was increased, whereas the all-solid-state batteries using the positive electrode active materials produced in Comparative Examples 3 and 4 had a discharge capacity that significantly decreased when the charge-discharge rate was increased. In particular, in Comparative Examples 3 and 4, the initial capacity and discharge rate characteristics were significantly inferior to those in Example 1 although the powder of the compound with the same composition as in Example 1 was used in the main portion. The inventor of the present invention thinks that the reason for this is that the particle size of the compound powder used in Comparative Example 3 was large and the number of rotations, which was the condition for a planetary ball mill used to perform compositing treatment, was small, and thus the conductive material was not uniformly dispersed on the surface and in the interior of particles of the compound and the resulting material did not function as a positive electrode active material.

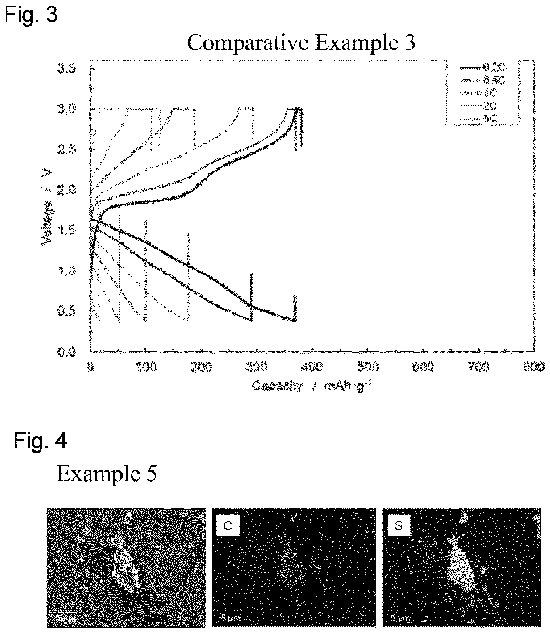

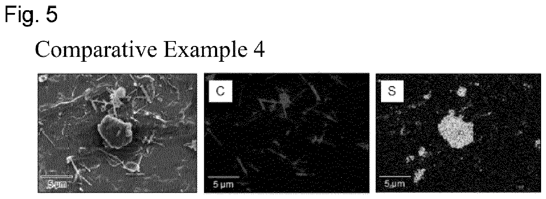

Figs. 4 and 5 show the states in which carbon element and sulfur element were present, mapped using SEM images obtained by observing the appearance of the positive electrode active material powders produced in Example 5 and Comparative Example 4 and EDS. Note that the compositions of the compounds used in Example 5 and Comparative Example 4 were the same. In the positive electrode active material powder produced in Example 5, carbon element serving as a component of the conductive material and sulfur element serving as a component of the compound were present so as to overlap each other, and thus it is seen that particles of the compound and the conductive material were uniformly composited with each other. On the other hand, in the positive electrode active material powder produced in Comparative Example 4, carbon element serving as a component of the conductive material was present at a position different from that of sulfur element in the compound, and thus it is seen that particles of the compound and the conductive material were not composited with each other but were merely mixed with each other in the positive electrode active material produced in Comparative Example 4.

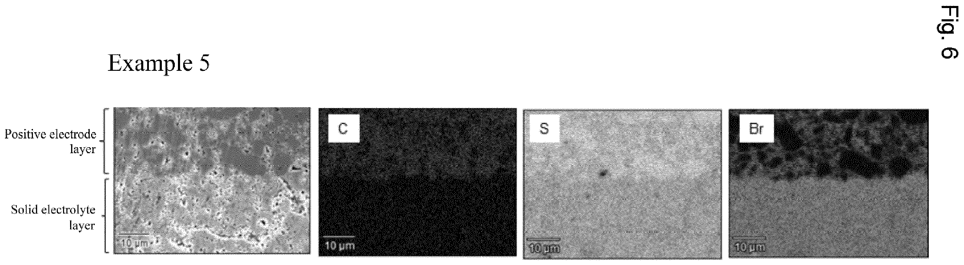

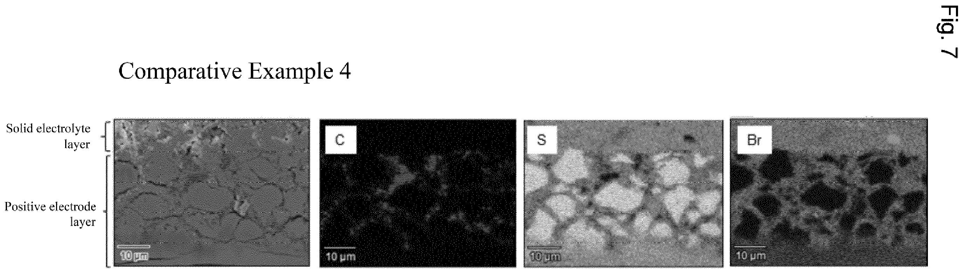

Figs. 6 and 7 show the states in which carbon element, sulfur element, and bromine element were present, mapped through SEM observation and EDS on cross-sections of the all-solid-state batteries using the positive electrode active material powders produced in Example 5 and Comparative Example 4 obtained through processing using a cross-section polisher (CP). In a cross-section of the all-solid-state battery using the positive electrode active material powder produced in Example 5, carbon element serving as a component of the conductive material was present at a position where bromine element serving as a component of the solid electrolyte was not present and a large amount of sulfur element was present, and thus it is seen that the conductive material was uniformly composited with the surface and the interior of particles of the compound. On the other hand, in a cross-section of the all-solid-state battery using the positive electrode active material powder produced in Comparative Example 4, carbon element serving as a component of the conductive material was present around a position where bromine element serving as a component of the compound was present and a large amount of sulfur element was present, and thus it is seen that the conductive material was not composited with particles of the compound and a powder of the compound and a powder of the conductive material were merely mixed with each other.

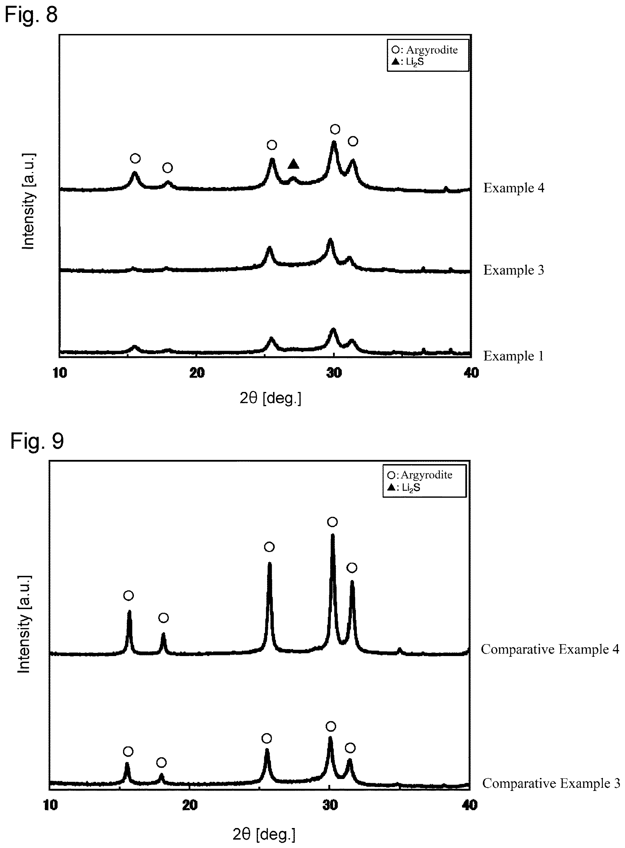

Fig. 8 shows XRD patterns of the positive electrode active material powders produced in Examples 1, 3, and 4. In Examples 1, 3, and 4, high centrifugal acceleration was applied due to the number of rotations being set large when compositing the main portion and the conductive portion in a mixed state using a planetary ball mill, and thus high mechanical energy was applied to the main portion and the conductive portion, and these portions were composited with each other. It is seen from the XRD diffraction patterns shown in Fig. 8 and the half widths shown in Table 3 below that, during the compositing process, the argyrodite-type crystalline phase was maintained while the crystallinity of the crystalline phase was moderately lowered, resulting in the broadening of the half widths of the diffraction peaks attributed to the argyrodite-type crystalline phase.

Fig. 9 shows XRD patterns of the positive electrode active material powders produced in Comparative Examples 3 and 4. In Comparative Examples 3 and 4, the centrifugal acceleration applied was not sufficient due to the number of rotations being set small when compositing the main portion and the conductive portion in a mixed state using a planetary ball mill, and thus high mechanical energy was not applied to the main portion and the conductive portion, and these portions were not sufficiently composited with each other. Furthermore, it is seen from the XRD diffraction patterns shown in Fig. 9 and the half widths shown in Table 3 below that the crystallinity of the argyrodite-type crystalline phase contained in the main portion was kept high.

**Table 3**

| | Example | | | Comparative Example | |
|---|---|---|---|---|---|
| | 1 | 3 | 4 | 3 | 4 |
| Half width (°) of peak A | 0.655 | 0.610 | 0.676 | 0.369 | 0.251 |

As described above in detail, the active material of the present invention can improve the performance of lithium ion batteries.

## Claims

1. A method for producing an active material, comprising:
a first step of preparing a compound containing lithium (Li) element, sulfur (S) element and an element M, and containing a crystalline phase having an argyrodite-type crystal structure, wherein M comprises at least one selected from the group consisting of phosphorus (P), germanium (Ge), antimony (Sb), silicon (Si), tin (Sn), aluminum (Al), titanium (Ti), iron (Fe), nickel (Ni), cobalt (Co), and manganese (Mn); and
a second step of mixing the compound and a conductive material to composite the compound with the conductive material.

2. The method for producing an active material according to claim 1, wherein, in the second step, mechanical energy is applied to the compound and the conductive material to composite the compound with the conductive material.

3. The method for producing an active material according to claim 1 or 2, wherein the second step is performed in such a manner that a half width of a peak at a position 2θ=29.62±1.0° is 0.4 or more in an X-ray diffraction pattern measured using CuKα1 rays.

4. The method for producing an active material according to any one of claims 1 to 3, wherein, in the second step, 1 to 50 parts by mass of the conductive material is mixed with 100 parts by mass of the compound.

5. The method for producing an active material according to any one of claims 1 to 4, wherein the compound has a volume cumulative particle size D₅₀ of from 0.1 µm to 20 µm at 50% cumulative volume as measured by laser diffraction scattering particle size distribution analysis.

6. The method for producing an active material according to any one of claims 1 to 5, wherein the compound further contains halogen (X) element.

7. The method for producing an active material according to claim 6, wherein the compound is represented by a composition formula LiₐMS_{b}X_{c} wherein M represents at least one element selected from the group consisting of phosphorus (P), germanium (Ge), antimony (Sb), silicon (Si), tin (Sn), aluminum (Al), titanium (Ti), iron (Fe), nickel (Ni), cobalt (Co), and manganese (Mn),
X represents at least one element selected from the group consisting of fluorine (F), chlorine (Cl), bromine (Br), and iodine (I),
*a* is from 3.0 to 9.0,
*b* is from 3.5 to 6.0, and
*c* is from 0.10 to 3.0.

8. The method for producing an active material according to any one of claims 1 to 7, wherein the conductive material is carbon black.

9. The method for producing an active material according to claim 8, wherein the conductive material is Ketjen black.

10. An active material comprising:
a compound containing lithium (Li) element, sulfur (S) element and an element M, and containing a crystalline phase having an argyrodite-type crystal structure, wherein M comprises at least one selected from the group consisting of phosphorus (P), germanium (Ge), antimony (Sb), silicon (Si), tin (Sn), aluminum (Al), titanium (Ti), iron (Fe), nickel (Ni), cobalt (Co), and manganese (Mn)); and
a conductive material,
wherein the active material is a composite material of the compound and the conductive material.

11. The active material according to claim 10, wherein the conductive material is inseparably dispersed in the compound.

12. The active material according to claim 10 or 11, wherein a half width of a peak at a position 2θ=29.62±1.0° is 0.4 or more in an X-ray diffraction pattern measured using CuKα1 rays.

13. The active material according to any one of claims 10 to 12, wherein 1 to 50 parts by mass of the conductive material is contained with respect to 100 parts by mass of the compound.

14. The active material according to any one of claims 10 to 13, wherein the conductive material is a carbon material or a metallic material.

15. The active material according to claim 14, wherein the conductive material is carbon black.

16. The active material according to claim 15, wherein the conductive material is Ketjen black.

17. The active material according to any one of claims 10 to 16, wherein the content of the lithium element in the compound is from 10 to 25% by mass.

18. The active material according to any one of claims 10 to 17, wherein the compound further contains halogen (X) element.

19. An electrode mixture comprising the active material according to any one of claims 10 to 18 and a sulfide solid electrolyte.

20. A battery comprising:
a positive electrode layer;
a negative electrode layer; and
a solid electrolyte layer located between the positive electrode layer and the negative electrode layer, and
the positive electrode layer containing the active material according to any one of claims 10 to 18.
